# EUROPEAN PATENT SPECIFICATION

(11) **EP 2 976 252 B1**
(45) Date of publication and mention of the grant of the patent: **28.11.2018**
(21) Application number: 14878999.3
(22) Date of filing: 16.07.2014
(51) Int. Cl.: B62D 53/08, B62D 53/10, B60D 1/01

(54) **FIFTH WHEEL HITCH KINGPIN ASSEMBLY**
ACHSZAPFENANORDNUNG FÜR SATTELKUPPLUNG
ENSEMBLE PIVOT D'ATTELAGE DE SELLETTE

(30) Priority: 20.01.2014 US 201414159140
(43) Date of publication of application: 27.01.2016
(73) Proprietor: SAF-Holland, Inc., Holland, Michigan 49423 (US)
(72) Inventor: TERPSMA, Eric, Holland, Michigan 49423 (US)
(74) Representative: Müller Schupfner & Partner Patent- und Rechtsanwaltspartnerschaft mbB
(86) International application number: PCT/US2014/046851
(87) International publication number: WO 2015/108565

(56) References cited:
- GB-A- 810 903
- GB-A- 810 903
- GB-A- 1 395 003
- US-A- 2 838 324
- US-A- 3 600 005
- US-A- 3 807 765
- US-A- 3 807 766
- US-A- 3 811 708
- US-A- 3 811 708
- US-A- 6 073 952
- US-B2- 7 766 361

## Description

### BACKGROUND OF THE INVENTION

The present invention relates to a kingpin assembly for use within a fifth wheel hitch assembly, and particularly to a kingpin assembly that includes a locking collet to prevent rotation of the kingpin with respect to an associated housing, and a spanner nut that aids in disassembly of the collet from the kingpin assembly.

US-3,600,005 A, US-2,838,324 A, US-3,811,708 A and GB 810 903 A relate to kingpin assemblies for coupling a semi-trailer to a towing vehicle, wherein the king pin is fastened to a support member.

### SUMMARY OF THE INVENTION

One aspect of the present invention is to provide a kingpin assembly that comprises a housing having a recess located therein, a kingpin having at least a portion located within the recess of the housing, a coupler member operably coupled to the kingpin, and a collet member engaging the housing of the kingpin, and engaging the collar member such that at least partially uncoupling the collar member from the kingpin at least partially disengages the collet member from the kingpin. Preferably, the kingpin is a single, integral piece.

The present inventive kingpin assembly prevents rotation of the kingpin with respect to the associated housing while simultaneously allowing easy access to and replacement of an associated kingpin subsequent to wear thereof. Further, the kingpin assembly is adapted to allow easy disassembly of the kingpin assembly by at least partially disengaging a collet member of the assembly as a coupler member is at least partially uncoupled from an associated kingpin. The present inventive assembly is more durable, allows replacement of certain components thereof by even unskilled personnel, is extremely efficient in use, capable of a long operating life, and particularly well adapted for the proposed use.

These and other advantages of the invention will be further understood and appreciated by those skilled in the art by reference to the following written specification, claims and appended drawings.

### BRIEF DESCRIPTION OF THE DRAWINGS

Fig. 1 is a side elevational view of a tractor and heavy duty trailer supported thereby;
Fig. 2 is a perspective view of a fifth wheel hitch assembly and kingpin assembly of the present invention;
Fig. 3A is a cross-sectional side view of the kingpin assembly fully assembled, taken through the line III-III, Fig. 2;
Fig. 3B is an enlarged view of the area IIIB of Fig. 3A;
Fig. 4 is an exploded cross-sectional side view of the kingpin assembly;
Fig. 5 is a cross-sectional side view of the kingpin assembly, wherein a coupler member is shown partially coupled with a kingpin, and a collet member is shown disengaged from the kingpin and a housing;
Fig. 6 is a cross-sectional side view of the kingpin assembly, wherein the coupler member is shown further coupled to the kingpin, and the collet member is shown partially engaging the kingpin;
Fig. 7 is a cross-sectional side view of the kingpin assembly, wherein the coupler member is fully coupled to the kingpin, and the collet member is fully engaged with the kingpin and the housing; and,
Fig. 8 is a cross-sectional side view of the kingpin assembly, wherein a keyway of the coupler member is shown abutting a keyway of the collet member.

### DETAILED DESCRIPTION OF THE PREFERRED EMBODIMENTS

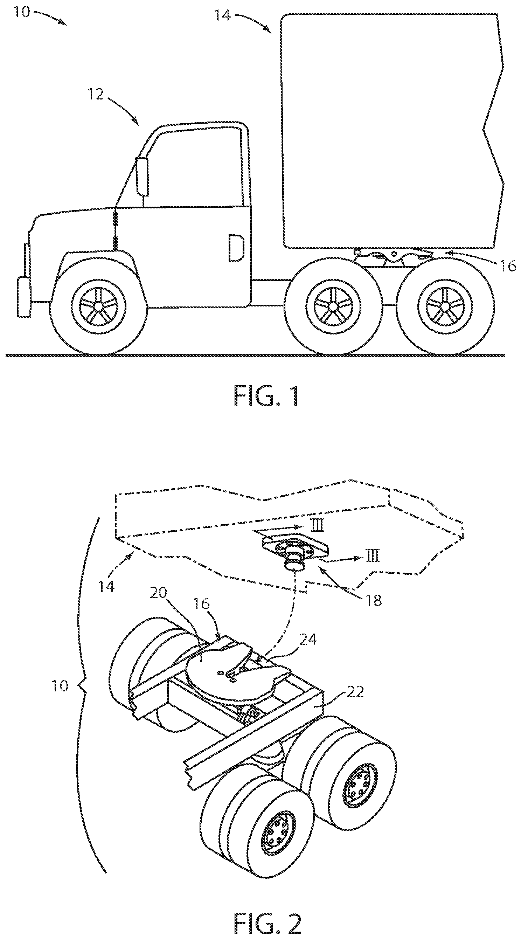

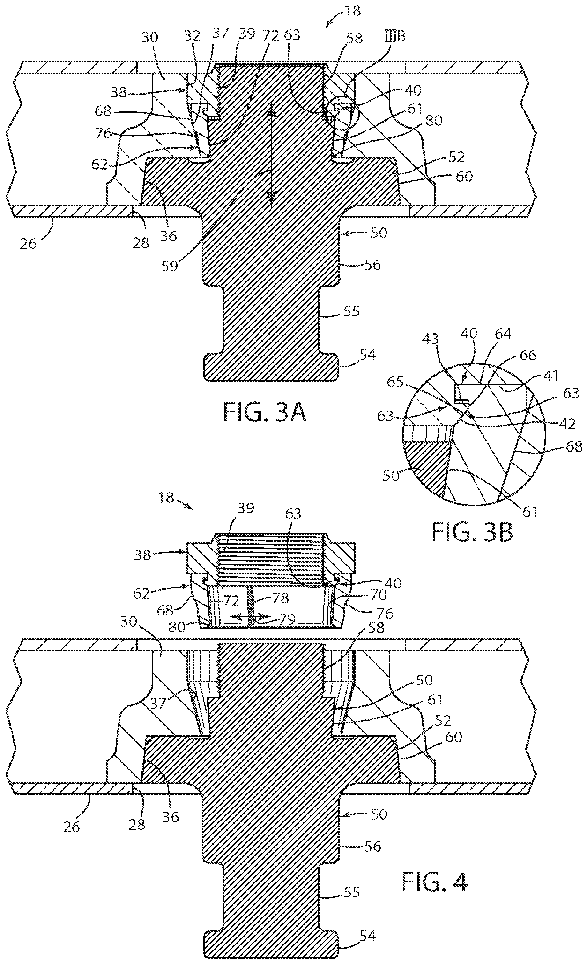

For purposes of description herein, the terms "upper," "lower," "right," "left," "rear," "front," "vertical," "horizontal," and derivatives thereof shall relate to the invention as oriented in Figs. 1 and 3. However, it is to be understood that the invention may assume various alternative orientations and step sequences, except where expressly specified to the contrary. It is also to be understood that the specific devices and processes illustrated in the attached drawings, and described in the following specification are exemplary embodiments of the inventive concepts defined in the appended claims. Hence, specific dimensions and other physical characteristics relating to the embodiments disclosed herein are not to be considered as limiting, unless the claims expressly state otherwise.

The reference numeral 10 (Fig. 1) generally designates a heavy duty tractor and trailer combination, wherein a tractor 12 operationally supports an associated trailer 14 via a fifth wheel hitch assembly 16 (Fig. 2) and a kingpin assembly 18 cooperating therewith and generally embodying the present invention. In the illustrated example, the fifth wheel hitch assembly 16 includes a fifth wheel hitch plate 20 pivotally coupled to a frame 22 of the associated tractor 12 and including a tapered kingpin-receiving throat 24 and a locking assembly (not shown) as well known in the art.

The kingpin assembly 18 (Figs. 3A-4) is adapted for use within a trailer skid plate 26 mounted to an underside of the associated trailer 14. The trailer skid plate 26 includes an aperture 28 extending therethrough and that cooperates with the kingpin assembly 18 therein. The kingpin assembly 18 includes a housing 30 having a recess in the form of a centrally-located aperture 32 extending therethrough. The aperture 32 further includes a downwardly-opening, conically-shaped step wall 36, and an upwardly-opening, conically-shaped engagement wall 37.

The kingpin assembly 18 further includes a ring-shaped collar member or spanner nut 38 including a centrally-located threaded aperture 39 and a first portion of a coupler or a circumferentially extending keyway 40, a first abutment surface 41, a conically-shaped second abutment surface 42, and a third abutment surface 43.

The kingpin assembly 18 further comprises a kingpin 50 that includes an upper head portion 52, a lower head portion 54, a recessed lock-receiving portion 55 positioned between the upper head portion 52 and the lower head portion 54, a body portion 56, a threaded upper portion 58 that is threadably received within the aperture 39 of the collar member 38, such that threadably tightening and loosening the collar member 38 with the kingpin 50 couples and uncouples the collar member 38 with the kingpin 50, and secures the kingpin 50 with respect to the housing 30 in the vertical direction 59. The upper head portion 52 of the kingpin 50 includes a first conically-shaped abutment surface 60 that abuts the step wall 36 of the housing 30, and a second conically-shaped abutment surface 61 located between the upper head portion 52 and the threaded upper portion 58.

The kingpin assembly 18 further includes a coupling member 62, which in the illustrated example comprises a collet member, positioned between the housing 30 and the kingpin 50. The collet member 62 is ring-shaped and includes a second portion of the coupler or a circumferentially extending keyway 63, a first abutment surface 64, a conically-shaped second abutment surface 65, a third abutment surface 66, a tapered, conically-shaped outer wall 68 and a conically-shaped inner wall 70 that defines an aperture 72 within which the kingpin 50 is received. In the illustrated example, the outer wall 68 includes a circumferentially-extending relief 76. As best illustrated in Fig. 4, a relief 78 extends through the collet member 62, thereby allowing the collet member 62 to expand and contract in a direction 79 as described below.

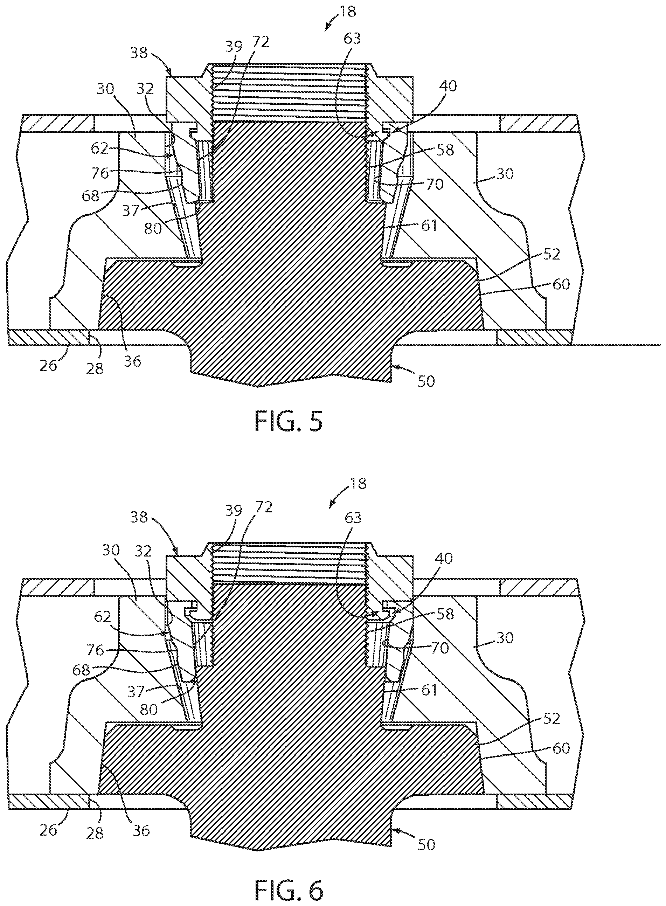

In assembly, as illustrated in Figs. 4-7, the kingpin 50 is placed within the aperture 32 of the housing 30. The collet member 62 is then coupled with the collar member 38 such that the keyway 63 of the collet member 62 is coupled with the keyway 40 of the collar member 38. The collet member 62 and the collar member 38 are then positioned over the kingpin 50 and located between the housing 30 and the kingpin 50. The collar member 38 is then threadably coupled to the kingpin 50, so that the collar member 38 is tightened onto the kingpin 50, thereby forcing the first abutment surface 41 and the second abutment surface 42 of the collar member 38 into abutment with the first abutment surface 64 and the second abutment surface 65 of the collet member 62, respectively, thereby forcing the outer wall 68 of the collet member 62 into frictional engagement with the inner wall 37 of the aperture 32, and the inner wall 70 into frictional engagement with the abutment surface 61 of the kingpin 50 with the kingpin 50, and as a result increasing the frictional engagement between the housing 30, the collet member 62, and the kingpin 50, and preventing rotation of the kingpin 50 with respect to the housing 30. A rounded corner 80 (Figs. 4 and 5) of the collet member 62 assists with beginning the engagement of the collet member 62 with the kingpin 50 as the inner diameter of the inner wall 70 may be less than the outer diameter of the kingpin 50 in the area of the abutment surface 61. The tightening of the collar member 38 with the kingpin 50 further draws the upper head portion 52 and the abutment surface 60 of the kingpin 50 into contact with the housing 30.

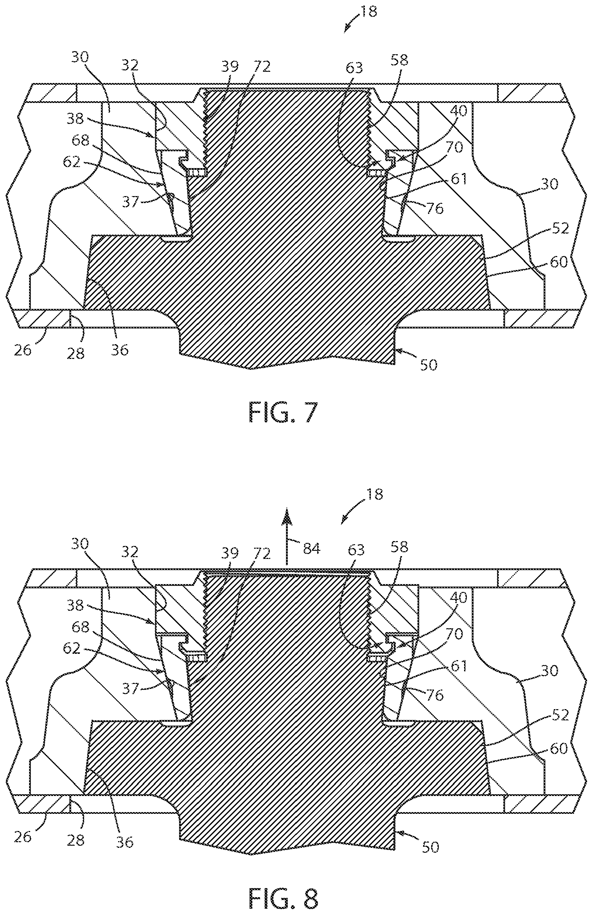

In disassembly, the collar member 38 (Fig. 8) is uncoupled from the kingpin 50 by unthreading the collar member 38 from the kingpin 50. As the collar member 38 is unthreaded the third abutment surface 43 of the collar member 38 abuts the third abutment surface 66 of the collet member 62, thereby moving the collet member 62 in an axial direction 84 and disengaging the collet member 62 from the inner wall 37 of the housing 30 and the abutment surface 61 of the kingpin 50. In the illustrated example, the collet member 62 is removed from the aperture 32 of the housing 30 along with the collar member 38.

The present inventive kingpin assembly prevents rotation of the kingpin with respect to the associated housing while simultaneously allowing easy access to and replacement of an associated kingpin subsequent to wear thereof. Further, the present inventive assembly is more durable, allows replacement of certain components thereof by even unskilled personnel, is extremely efficient in use, capable of a long operating life, and particularly well adapted for the proposed use.

## Claims

1. A kingpin assembly, comprising:
a housing (30) having a recess located therein;
a kingpin (50) having at least a portion located within the recess of the housing (30);
**characterized by** a coupler member (38) operably coupled to the kingpin (50); and
a collet member (62) engaging the housing (30) and the kingpin (50), and engaging the coupler member (38) such that at least partially uncoupling the coupler member (38) from the kingpin (50) at least partially disengages the collet member (62) from the kingpin (50).

2. The kingpin assembly of claim 1, wherein the coupler member (38) includes a first portion of a coupler and the collet member (62) includes a second portion of the coupler, and wherein the first portion of the coupler is coupled with the second portion of the coupler.

3. The kingpin assembly of claim 2, wherein the first portion of the coupler comprises a first keyway (40) and the second portion of the coupler includes a second keyway (63), and
wherein the first keyway (40) and second keyway (63) are preferably each circumferentially extending.

4. The kingpin assembly of any one of the preceding claims, wherein the first portion of the coupler engages the second portion of the coupler as the coupler member is at least partially uncoupled from the kingpin (50), thereby at least partially disengaging the collet member (62) from the kingpin (50), and
wherein the first portion of the coupler preferably engages the second portion of the coupler as the coupler member is threadably uncoupled from the kingpin (50).

5. The kingpin assembly of any one of the preceding claims, wherein the collet member (62) is movable between a seated position and an unseated position, wherein the coupler member (38) is movable between a first position and a second position that is different from the first position, and wherein the coupler member (38) moves the collet member (62) from the seated position towards the unseated position as the coupler member (38) is moved from the first position to the second position.

6. The kingpin assembly of any one of the preceding claims, wherein coupling the coupler member (38) with the kingpin (50) forces engagement of the collet member (62) with at least one of the housing (30) and the kingpin (50), and wherein coupling the coupler member (38) with the kingpin (50) preferably forces engagement of the collet member (62) with the housing (30) and the kingpin (50).

7. The kingpin assembly of any one of the preceding claims, wherein the collet member (62) is positioned between the kingpin (50) and the coupler member (38).

8. The kingpin assembly of any one of the preceding claims, wherein the coupler member (38) is adjustable with respect to the kingpin (50) such that adjusting the coupler with respect to the kingpin (50) increases the frictional engagement between the collet member (62) and at least one of the housing (30) and the kingpin (50).

9. The kingpin assembly of any one of the preceding claims, wherein the coupler member(38) is threadably coupled with the kingpin(50).

10. The kingpin assembly of any one of the preceding claims, wherein the coupler member (38) includes an aperture (39) through which the kingpin (50) extends, and
wherein the kingpin (50) preferably includes a threaded portion (58) that is threadably received within the aperture (39) of the coupler member (38).

11. The kingpin assembly of any one of the preceding claims, wherein the recess of the housing (30) includes a tapered inner wall (37), and wherein the collet member (62) engages the tapered inner wall (37).

12. The kingpin assembly of any one of the preceding claims, wherein the collet member (62) includes a tapered outer wall (68) that engages the tapered inner wall (37) of the housing (30).

13. The kingpin assembly of any one of the preceding claims, wherein the collet member (62) is ring-shaped, and/or
wherein the collet member (62) includes a slot (76) positioned about the periphery thereof.

14. The kingpin assembly of any one of the preceding claims, wherein the housing (30) and the kingpin (50) each include conically-shaped surfaces (36; 60) that abut one another.

15. The kingpin assembly of any one of the preceding claims, wherein the coupler member (38) comprises a spanner nut threadably coupled with the kingpin (50).

## Patentansprüche

1. Königszapfenanordnung, die aufweist:
ein Gehäuse (30), in dem sich eine Vertiefung befindet;
einen Königszapfen (50), von dem sich mindestens ein Abschnitt innerhalb der Vertiefung des Gehäuses (30) befindet;
**gekennzeichnet durch** ein Kopplerelement (38), das mit dem Königszapfen (50) wirkverbunden ist; und
ein Spannringelement (62), das das Gehäuse (30) und den Königszapfen (50) einspannt, und das Kopplerelement (38) so einspannt, dass das zumindest teilweise Entkoppeln des Kopplerelements (38) vom Königszapfen (50) zumindest teilweise das Spannringelement (62) vom Königszapfen (50) löst.

2. Königszapfenanordnung nach Anspruch 1, wobei das Kopplerelement (38) einen ersten Abschnitt eines Kopplers und das Spannringelement (62) einen zweiten Abschnitt des Kopplers enthält, und wobei der erste Abschnitt des Kopplers mit dem zweiten Abschnitt des Kopplers gekoppelt ist.

3. Königszapfenanordnung nach Anspruch 2, wobei der erste Abschnitt des Kopplers eine erste Keilnut (40) und der zweite Abschnitt des Kopplers eine zweite Keilnut (63) aufweist, und
wobei die erste Keilnut (40) und die zweite Keilnut (63) sich je vorzugsweise in Umfangsrichtung erstrecken.

4. Königszapfenanordnung nach einem der vorhergehenden Ansprüche, wobei der erste Abschnitt des Kopplers den zweiten Abschnitt des Kopplers einspannt, wenn das Kopplerelement zumindest teilweise vom Königszapfen (50) entkoppelt wird, wodurch das Spannringelement (62) zumindest teilweise vom Königszapfen (50) gelöst wird, und
wobei der erste Abschnitt des Kopplers vorzugsweise den zweiten Abschnitt des Kopplers einspannt, wenn das Kopplerelement vom Königszapfen (50) losgeschraubt wird.

5. Königszapfenanordnung nach einem der vorhergehenden Ansprüche, wobei das Spannringelement (62) zwischen einer aufsitzenden Stellung und einer abgehobenen Stellung beweglich ist, wobei das Kopplerelement (38) zwischen einer ersten Stellung und einer zweiten Stellung beweglich ist, die sich von der ersten Stellung unterscheidet, und wobei das Kopplerelement (38) das Spannringelement (62) von der aufsitzenden Stellung in die abgehobene Stellung bewegt, wenn das Kopplerelement (38) von der ersten Stellung in die zweite Stellung bewegt wird.

6. Königszapfenanordnung nach einem der vorhergehenden Ansprüche, wobei das Koppeln des Kopplerelements (38) mit dem Königszapfen (50) den Eingriff des Spannringelements (62) mit mindestens einem vom Gehäuse (30) und vom Königszapfen (50) erzwingt, und
wobei das Koppeln des Kopplerelements (38) mit dem Königszapfen (50) vorzugsweise den Eingriff des Spannringelements (62) mit dem Gehäuse (30) und dem Königszapfen (50) erzwingt.

7. Königszapfenanordnung nach einem der vorhergehenden Ansprüche, wobei das Spannringelement (62) zwischen dem Königszapfen (50) und dem Kopplerelement (38) positioniert ist.

8. Königszapfenanordnung nach einem der vorhergehenden Ansprüche, wobei das Kopplerelement (38) bezüglich des Königszapfens (50) so eingestellt werden kann, dass die Einstellung des Kopplers bezüglich des Königszapfens (50) den Reibungseingriff zwischen dem Spannringelement (62) und mindestens einem vom Gehäuse (30) und vom Königszapfen (50) erhöht.

9. Königszapfenanordnung nach einem der vorhergehenden Ansprüche, wobei das Kopplerelement (38) mit dem Königszapfen (50) verschraubt ist.

10. Königszapfenanordnung nach einem der vorhergehenden Ansprüche, wobei das Kopplerelement (38) eine Öffnung (39) enthält, durch die sich der Königszapfen (50) erstreckt, und
wobei der Königszapfen (50) vorzugsweise einen Gewindeabschnitt (58) enthält, der schraubbar innerhalb der Öffnung (39) des Kopplerelements (38) aufgenommen wird.

11. Königszapfenanordnung nach einem der vorhergehenden Ansprüche, wobei die Vertiefung des Gehäuses (30) eine abgeschrägte Innenwand (37) enthält, und wobei das Spannringelement (62) die abgeschrägte Innenwand (37) einspannt.

12. Königszapfenanordnung nach einem der vorhergehenden Ansprüche, wobei das Spannringelement (62) eine abgeschrägte Außenwand (68) enthält, die die abgeschrägte Innenwand (37) des Gehäuses (30) einspannt.

13. Königszapfenanordnung nach einem der vorhergehenden Ansprüche, wobei das Spannringelement (62) ringförmig ist, und/oder
wobei das Spannringelement (62) einen Schlitz (76) enthält, der um seinen Umfang herum positioniert ist.

14. Königszapfenanordnung nach einem der vorhergehenden Ansprüche, wobei das Gehäuse (30) und der Königszapfen (50) je konisch geformte Flächen (36; 60) enthalten, die aneinander angrenzen.

15. Königszapfenanordnung nach einem der vorhergehenden Ansprüche, wobei das Kopplerelement (38) eine Spannschlossmutter aufweist, die mit dem Königszapfen (50) verschraubt ist.

## Revendications

1. Ensemble formant pivot d'attelage, comprenant :
un boîtier (30) ayant un évidement situé à l'intérieur ;
un pivot d'attelage (50) ayant au moins une portion située à l'intérieur de l'évidement du boîtier (30) ;
**caractérisé par** un élément de couplage (38) fonctionnellement couplé au pivot d'attelage (50) ; et
un élément de collet (62) qui engage le boîtier (30) et le pivot d'attelage (50), et qui engage l'élément de couplage (38) de telle façon qu'un découplage au moins partiel de l'élément de couplage (38) vis-à-vis du pivot d'attelage (50) désengage au moins partiellement l'élément de collet (62) vis-à-vis du pivot d'attelage (50).

2. Ensemble formant pivot d'attelage selon la revendication 1, dans lequel l'élément de coupleur (38) inclut une première portion d'un coupleur et élément de collet (62) inclut une seconde portion du coupleur, et dans lequel la première portion du coupleur est couplée avec la seconde portion du coupleur.

3. Ensemble formant pivot d'attelage selon la revendication 2, dans lequel la première portion du coupleur comprend une première rainure de clavette (40) et la seconde portion du coupleur inclut une seconde rainure de clavette (63), et
dans lequel la première rainure de clavette (40) et la seconde rainure de clavette (63) s'étendent de préférence chacune circonférentiellement.

4. Ensemble formant pivot d'attelage selon l'une quelconque des revendications précédentes, dans lequel la première portion du coupleur engage la seconde portion du coupleur lorsque l'élément de coupleur est au moins partiellement découplé vis-à-vis du pivot d'attelage (soit 50), en désengageant ainsi au moins partiellement l'élément de collet (62) vis-à-vis du pivot d'attelage (50), et
dans lequel la première portion du coupleur engage de préférence la seconde portion du coupleur lorsque l'élément de coupleur est découplé à la manière d'une vis par rapport au pivot d'attelage (50).

5. Ensemble formant pivot d'attelage selon l'une des revendications précédentes, dans lequel l'élément de collet (66) est déplaçable entre une position en assise et une position dégagée, dans lequel l'élément de coupleur (38) est déplaçable entre une première position et une seconde position qui est différente de la première position, et dans lequel l'élément de coupleur (38) déplace l'élément de collet (62) depuis la position en assise vers la position dégagée lorsque l'élément de coupleur (38) est déplacé de la première position à la seconde position.

6. Ensemble formant pivot d'attelage selon l'une quelconque des revendications précédentes, dans lequel le couplage de l'élément de coupleur (38) avec le pivot d'attelage (50) force l'engagement de l'élément de collet (62) avec un élément au moins parmi le boîtier (30) et le pivot d'attelage (50), et
dans lequel le couplage de l'élément de coupleur (38) avec le pivot d'attelage (50) force de préférence l'engagement de l'élément de collet (62) avec le boîtier (30) et avec le pivot d'attelage (50).

7. Ensemble formant pivot d'attelage selon l'une quelconque des revendications précédentes, dans lequel l'élément de collet (62) est positionné entre le pivot d'attelage (50) et l'élément de coupleur (38).

8. Ensemble formant pivot d'attelage selon l'une quelconque des revendications précédentes, dans lequel l'élément de coupleur (38) et ajustable par rapport au pivot d'attelage (50), de sorte qu'un ajustement du coupleur par rapport au pivot d'attelage (50) augmente l'engagement à friction entre l'élément de collet (62) et un élément au moins parmi le boîtier (30) et le pivot d'attelage (50).

9. Ensemble formant pivot d'attelage selon l'une quelconque des revendications précédentes, dans lequel l'élément de coupleur (38) est couplé à la manière d'une vis avec le pivot d'attelage (50).

10. Ensemble formant pivot d'attelage selon l'une quelconque des revendications précédentes, dans lequel l'élément de coupleur (38) inclut une ouverture (39) à travers laquelle s'étend le pivot d'attelage (50), et dans lequel le pivot d'attelage (50) inclut de préférence une portion à pas de vis (58) qui est reçue par vissage à l'intérieur de l'ouverture (39) de l'élément de coupleur (38).

11. Ensemble formant pivot d'attelage selon l'une quelconque des revendications précédentes, dans lequel l'évidement du boîtier (30) inclut une paroi intérieure effilée (37), et dans lequel l'élément de collet (62) engage la paroi intérieure effilée (37).

12. Ensemble formant pivot d'attelage selon l'une quelconque des revendications précédentes, dans lequel l'élément de collet (62) inclut une paroi extérieure effilée (68) qui engage la paroi intérieure effilée (37) du boîtier (30).

13. Ensemble formant pivot d'attelage selon l'une quelconque des revendications précédentes, dans lequel l'élément de collet (62) est de forme annulaire, et/ou
dans lequel l'élément de collet (62) inclut une fente (76) positionnée autour de la périphérie de celui-ci.

14. Ensemble formant pivot d'attelage selon l'une quelconque des revendications précédentes, dans lequel le boîtier (30) et le pivot d'attelage (50) incluent chacun des surfaces de forme conique (36 ; 60) qui sont en butée l'une contre l'autre.

15. Ensemble formant pivot d'attelage selon l'une quelconque des revendications précédentes, dans lequel l'élément de coupleur (38) comprend un écrou tendeur couplé par vissage avec le pivot d'attelage (50).
